# EUROPEAN PATENT SPECIFICATION

(11) **EP 4 449 289 B1**
(45) Date of publication and mention of the grant of the patent: **10.09.2025**
(21) Application number: 22717921.5
(22) Date of filing: 12.04.2022
(51) Int. Cl.: G06F 21/62, H04L 9/40

(54) **METHOD, USER EQUIPMENT (UE), NETWORK NODE, FOR PROTECTING A MACHINE LEARNING (ML) MODEL HOSTED IN A NETWORK NODE**
VERFAHREN, BENUTZERGERÄT (UE), NETZWERKKNOTEN ZUM SCHUTZ EINES IN EINEM NETZWERKKNOTEN GEHOSTETEN MASCHINENLERNMODELLS (ML)
PROCÉDÉ, ÉQUIPEMENT UTILISATEUR (UE), NOEUD DE RÉSEAU, PERMETTANT DE PROTÉGER UN MODÈLE D'APPRENTISSAGE MACHINE (ML) HÉBERGÉ DANS UN NOEUD DE RÉSEAU

(30) Priority: 17.12.2021 GR 20210100893
(43) Date of publication of application: 23.10.2024
(73) Proprietor: Telefonaktiebolaget LM Ericsson (publ), 164 83 Stockholm (SE)
(72) Inventor: RAIZER, Klaus, 13332-166 Indaiatuba (BR); SHOKRI GHADIKOLAEI, Hossein, 187 51 Täby (SE); VANDIKAS, Konstantinos, 169 73 Solna (SE); SCHAEFER, Christian, 169 57 Solna (SE)
(74) Representative: Ericsson
(86) International application number: PCT/IB2022/053436
(87) International publication number: WO 2023/111694

(56) References cited:
- US-A1- 2019 392 305
- HOU JIAHUI ET AL: "Model Protection: Real-time Privacy-preserving Inference Service for Model Privacy at the Edge", IEEE TRANSACTIONS ON DEPENDABLE AND SECURE COMPUTING, 9 November 2021 (2021-11-09), XP055956768, Retrieved from the Internet <URL:https://ieeexplore.ieee.org/document/9609559> [retrieved on 20220831], DOI: 10.1109/TDSC.2021.3126315
- SEBASTIAN P BAYERL ET AL: "Offline Model Guard: Secure and Private ML on Mobile Devices", ARXIV.ORG, CORNELL UNIVERSITY LIBRARY, 201 OLIN LIBRARY CORNELL UNIVERSITY ITHACA, NY 14853, 5 July 2020 (2020-07-05), XP081716401, DOI: 10.23919/DATE48585.2020.9116560

## Description

### TECHNICAL FIELD

The present disclosure relates to the security of Machine Learning models.

### BACKGROUND

The internet of senses is expected to become a reality in the years to come, and to be one of the key use-cases towards the sixth generation standard in telecommunications (6G). In that context, a fully immersive digital experience and digital representations allows for new ways to have human-human and human-machine interactions.

With a full-digital experience, massive amounts of data are expected to be produced and consumed in multiple modalities by the users, e.g., bio reading such as user behavior, electroencephalography (eeg), electromyography (emg) and electrocardiography (ecg) signals, vision, sound, taste, touch, and reactions to various sensory inputs. This massive amount of data allows for the development of artificial intelligence (AI) models, ranging from traditional machine learning and data analytics to digital twins (DT) of real-world objects or even individual users.

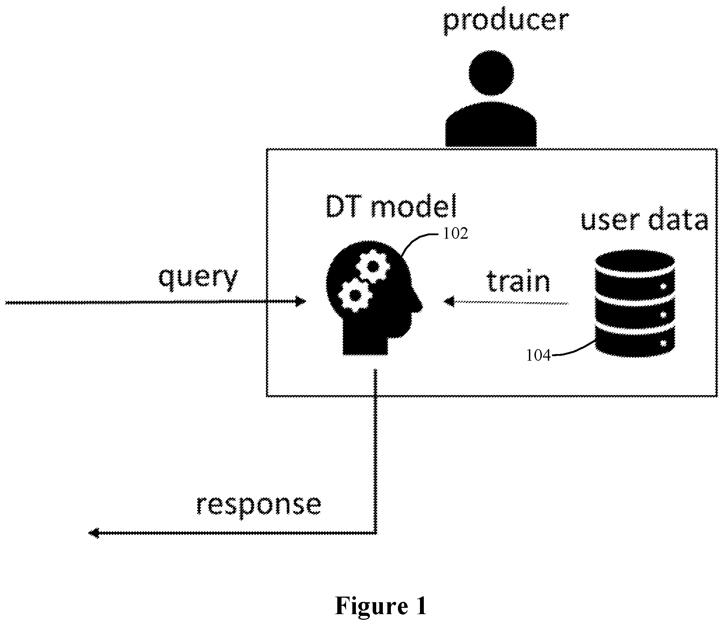

Figure 1 illustrates a digital twin model 102 of a user. It includes multiple machine learning (ML) models and behavior patterns based on user's internet of senses data 104. A DT can be used for, e.g., automating personal tasks, filtering of images, selecting external information and getting revenue from third party access.

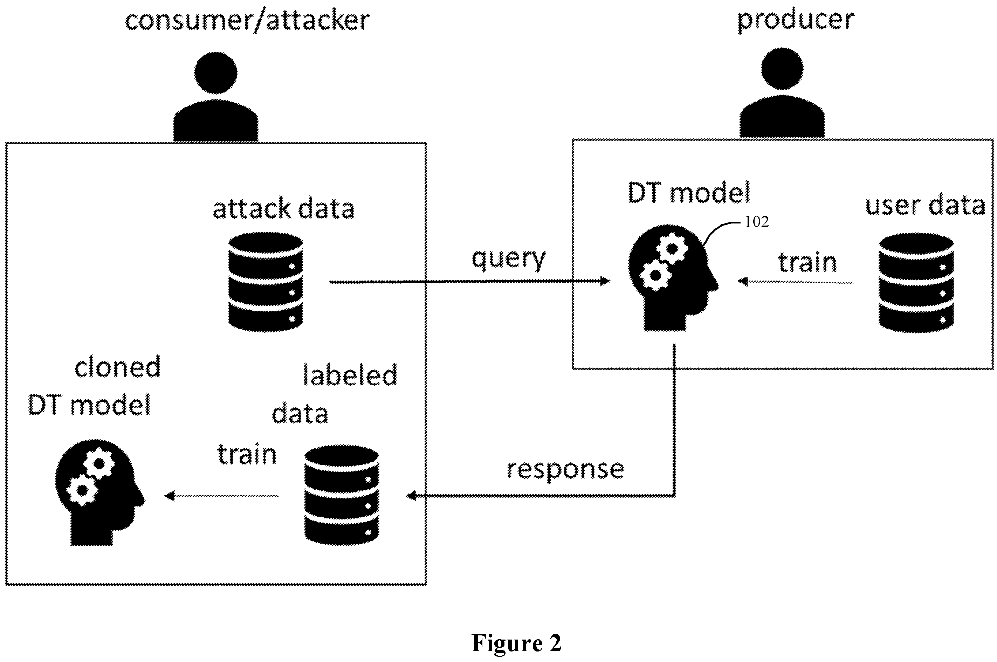

These digital twins could be represented as simple avatars (like those in existence today), or as very complex models of human behavior and cognition trained on an individual's personal internet of senses data. For example, an AI based DT of William Shatner was created to preserve his experiences for future generations. A DT such as this one, but based on internet-of-senses and massive amounts of data, would be an even more complete and accurate representation of the user. This scenario exacerbates the issue of data and model privacy. For example, there is a possible risk of use of a DT by others without consent, since the DT might contain knowledge about an individual and modeling of the individual's preferences and decision-making process. Others could, e.g. clone the DT, as illustrated in Figure 2, or outright steal the DT by means of exploiting security breaches or via model inversion attacks.

DT data and models of specific individuals (or specific groups of people) can be even more sensitive than models of populations. At the same time, there are ever-increasing demands from service providers (various apps and websites) to access user data and run some AI algorithms on this data, without providing detailed specifics on the purpose of such use, which could pose a privacy/security risk.

The article "Model Protection: Real-time Privacy-preserving Inference Service for Model Privacy at the Edge" by Hou Jiahui, et al, in the IEEE Transactions on Dependable and Secure Computing, 9 November 2021, DOI: 10.1109/TDSC.2021.3126315, URL: https://ieeexplore.ieee.org/document/9609559, discusses a secure enclave (e.g., SGX) for improving security efficiency compared to cryptographic techniques. The article "Offline Model Guard: Secure and Private ML on Mobile Devices" by Sebastian Bayerl, et al, on Arxiv.org, Cornell University Library, 201 Olin Library Cornell University Ithaca, NY 14853, 5 July 2020 DOI: 1 0.2391 9/DATE48585.2020.91 1 6560 discusses an offline model guard. US 2019/392305 A1 discusses mechanisms are provided to implement an enhanced privacy deep learning system framework.

### SUMMARY

Independent method claim 1, to which the reader should now refer, defines a method, executed in a user equipment, for protecting a machine learning model hosted in a network node. Independent method claim 9 defines a method, executed in a network node, for protecting a machine learning model hosted in the network node. Independent claims 12 - 15 define associated user equipment, a network node, and non-transitory computer readable media. The dependent claims define specific embodiments.

Existing solutions for protecting ML models from model extraction attacks only work against naive adversaries. Most common approaches include detecting queries that could be part of a model extraction attack, watermarking predictions made by an application programming interface (API) to later claim ownership of models that were extracted, imposing limitations to the use of the access API to prevent assembly of a training dataset for cloning. Imposing limitation to the use of an API is not ideal as it hurts the usability of the API. Also, more sophisticated adversaries might beable to circumvent the other approaches, e.g., by learning how to fool a query attack detection mechanism, or by retraining models without the watermarks.

A solution that keeps the digital twin model safe, while at the same time keeping the API's usability is therefore needed.

There is provided a method, executed in a user equipment (UE), for protecting a machine learning (ML) model hosted in a network node. The method comprises sending an original request to the ML model hosted in the network node. The method comprises receiving, from the network node, a request for establishing a secure connection to a post processing module to be installed in a secure enclave of the UE. The method comprises installing the post processing module in the secure enclave and sending, to the network node, an address for reaching the post processing module through the secure connection in the secure enclave. The method comprises receiving, in the post processing module in the secure enclave, a response to the original request to the ML model from the network node. The method comprises processing the response to the original request to the ML with the post processing module installed in the secure enclave, thereby protecting the ML model. The method comprises obtaining the processed response from the secure enclave, for use by the UE.

There is provided a method, executed in a network node, for protecting a machine learning (ML) model hosted in the network node. The method comprises receiving, from a user equipment (UE), an original request to the ML model. The method comprises sending, to the UE, a post processing module and a request for establishing a secure connection to the post processing module which is to be installed in a secure enclave of the UE. The method comprises receiving an address for reaching the post processing module through the secure connection. The method comprises sending, to the post processing module, a response to the original request to the ML model, for post processing.

There is provided a user equipment (UE) operative to protect a machine learning (ML) model hosted in a network node, the UE comprising processing circuits and a memory. The memory contains instructions executable by the processing circuits whereby the UE is operative to send an original request to the ML model hosted in the network node. The UE is operative to receive, from the network node, a request for establishing a secure connection to a post processing module to be installed in a secure enclave of the UE. The UE is operative to install the post processing module in the secure enclave and send, to the network node, an address for reaching the post processing module through the secure connection in the secure enclave. The UE is operative to receive, in the post processing module in the secure enclave, a response to the original request to the ML model from the network node. The UE is operative to process the response to the original request to the ML with the post processing module installed in the secure enclave, thereby protecting the ML model. The UE is operative to obtain the processed response from the secure enclave, for use by the UE.

There is provided a network node, operative to protect a machine learning (ML) model hosted in the network node, comprising processing circuits and a memory. The memory contains instructions executable by the processing circuits whereby the network node is operative to receive, from a user equipment (UE), an original request to the ML model. The network node is operative to send, to the UE, a post processing module and a request for establishing a secure connection to the post processing module which is to be installed in a secure enclave of the UE. The network node is operative to receive an address for reaching the post processing module through the secure connection. The network node is operative to send, to the post processing module, a response to the original request to the ML model, for post processing.

There is provided a non-transitory computer readable media having stored thereon instructions for protecting a machine learning (ML) model hosted in a network node, the instructions comprising any of the steps described herein.

The methods, user equipment, network node and non-transitory computer readable media provided herein present improvements to the way machine learning (ML) models or digital twins can be protected.

### BRIEF DESCRIPTION OF THE DRAWINGS

Figure 1 is a block diagram of a digital twin model of a user.
Figure 2 is a block diagram illustrating the cloning of a provider's digital twin model.
Figure 3 is a block diagram showing an overview of digital twins safeguarding modules.
Figure 4 is a sequence diagram illustrating a method according to an example embodiment.
Figure 5 is a flowchart of a method executed in a user equipment (UE), for protecting a machine learning (ML) model hosted in a network node
Figure 6 is a flowchart of a method executed in a network node, for protecting a machine learning (ML) model hosted in a network node
Figures 7a and b are a schematic illustration of two variants of a user equipment.
Figure 8 is a schematic illustration of a virtualization environment in which the different method(s) and apparatus(es) or network node described herein can be deployed.

### DETAILED DESCRIPTION

Various features will now be described with reference to the drawings to fully convey the scope of the disclosure to those skilled in the art.

Sequences of actions or functions may be used within this disclosure. It should be recognized that some functions or actions, in some contexts, could be performed by specialized circuits, by program instructions being executed by one or more processors, or by a combination of both.

Further, computer readable carrier or carrier wave may contain an appropriate set of computer instructions that would cause a processor to carry out the techniques described herein.

The functions/actions described herein may occur out of the order noted in the sequence of actions or simultaneously. Furthermore, in some illustrations, some blocks, functions or actions may be optional and may or may not be executed; these are generally illustrated with dashed lines.

A solution is proposed herein that relies on a secure enclave in a consumer node. The proposed solution assumes the well-established request-response pattern that is known when interacting remotely with external services (in this case digital twins). However, to protect the digital twin from model inversion attacks, the secure enclave is used to randomize/obfuscate and personalize the output of the digital twin in accordance with a set of logical rules, set by the creator of the DT. This secure enclave holds the DT's payload coming from a producer. The method described herein makes sure that the original payload (i.e., the output of the DT) is kept secure inside the secure enclave (e.g. the payload coming from DT is encrypted and only the method inside the secure enclave can decode it), without hurting API usability. Only an obfuscated version of the output is rendered to the user. Since that output is determined on the fly it may always be different and personalized, thus making model inversion attacks hard or ideally impossible.

Herein is described a specific procedure for receiving the DT's payload into the secure enclave. This payload contains an attestation code which is used to verify that the code that is executed within the user's secure enclave and not in the user's regular CPU.

In addition, a post_processing_module is provided, which is used locally to create a personalized/obfuscated rendition of the output that is the original output of the DT. The personalized rendition of the output is designed in such a way to harden or even make the process of model inversion impossible. This is because the post-processing module randomizes the output using private data of the user or of the user's surroundings, such as biometric or environmental data that can be used as a random seed.

The nature of the user, i.e., single person or company, should not affect the method, which is generic enough to accommodate both scenarios if a personalized token (i.e. stemming from unique biometric data) which identifies the user (or organization) is provided. As such for the same input different outputs can be produced for each request. In the case of an organization two types of organizations are considered: 1) organizations such as social media platforms that acts as proxies between their users and a provider of the digital twin - in that case biometric data of the real consumer can be used - 2) organizations as consumers of digital twins, where, in this case, randomized tokens or other digital certificates are issued by the organizations.

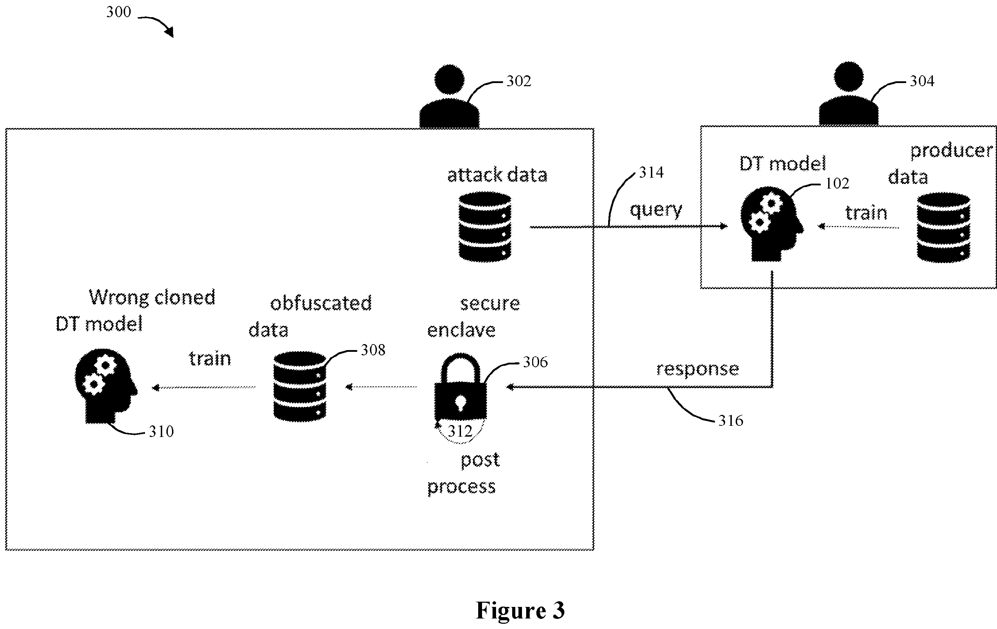

Figure 3 provides an overview of a digital twin safeguarding module 300. An attacker 302 aims to clone a DT model 102 from a producer 304. A response from the producer 304 goes into a secure enclave 306, and a post-process function 312 modifies this input response into an obfuscated version of itself 308, which, if used for cloning purposes, produces an inaccurate DT model 310.

Still referring to figure 3, a trust model/threat model scenario is presented in which two main entities are considered, namely the consumer 302 and the producer 304 of the digital twin. The consumer 302 of the DT can be a user equipment (UE), while the producer 304 is meant to be a server such as a decentralized system which exposes an API over the network, the API giving access to the digital twin over a specific endpoint (ip_address:port), which, in most cases, can act as a load balancer between the user and the DT's producer infrastructure.

It is assumed that the digital twin consumer (or user) 302 might either be an honest-but-curious or a malicious user. As such, the user might want to create a local copy of the digital twin 310 by sending multiple requests 314 to the digital twin producer and recording the responses 316. Afterwards, the honest-but-curious or malicious user trains another model that matches this association thus recreating a cloned digital twin artifact 310.

To solve the problem created by the possibility of recreating a cloned digital twin artifact, a secure enclave is used, and the user is required to have such functionality available in their system. Examples of systems having secure enclaves today, or which could have secure enclaves in the future, comprise cell phones, laptop computers as well as servers and cloud infrastructure. Some Internet of things devices might have the capability for supporting a secure enclave in the future as well. The implementation of the secure enclave is trusted, meaning it is assumed that the hardware manufacturer has implemented the secure enclave and the corresponding software development kits (SDKs) in such a way that whatever process is running inside the secure enclave is not accessible from the regular central processing unit (CPU) and only the processes running within the secure enclave can communicate with other processes inside the secure enclave. The memory of the enclaved process is also assumed to be encrypted and not accessible by any other process.

It is assumed that a post_processing_module 312 that is communicated by the digital producer 304 is not malicious in the sense that it does not try to communicate any local information it receives to the digital twin producer and only functions for its purpose which is that of personalizing the output of the model. Additionally, a framework should be available that takes the producers post_processing_module and makes sure that it can be executed on the consumers device. In addition, it is assumed that the secure enclave (management) has its own network stack or dedicated access to consumer network interface adapter and, as such, can consume messages directly from the network without the needed to be copied by an untrusted CPU to a shared memory space (shared between the untrusted CPU and the trusted/secure enclave).

As shown on Figure 3, when the obfuscated data 308 is used to try to train a cloned DT model 310, the model that is obtained is wrong and does not correspond to the DT 102 that is stored in the producer 304.

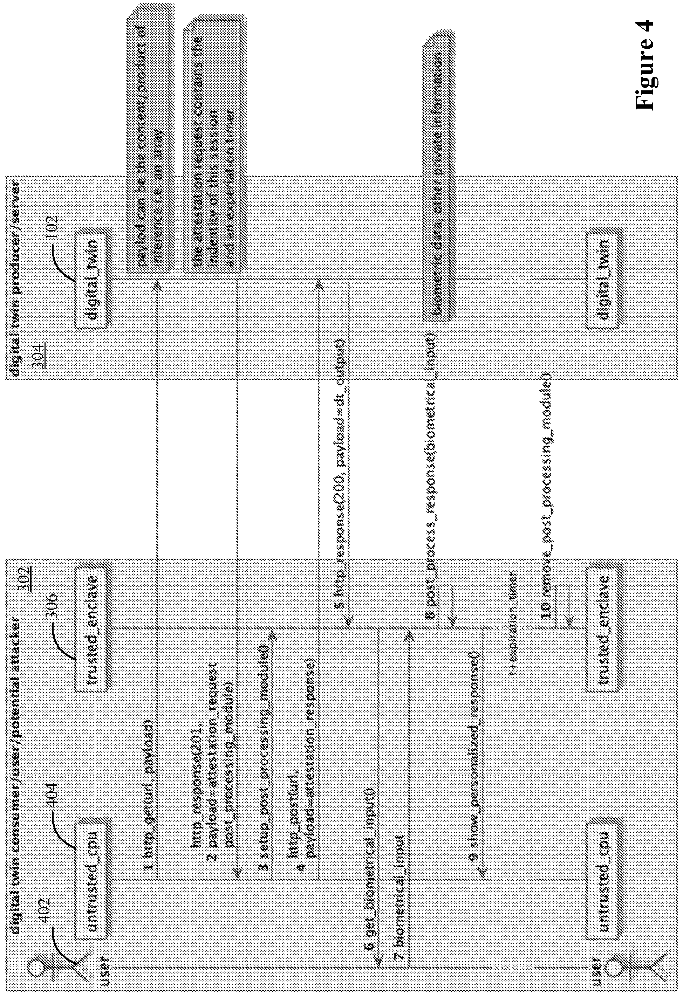

Figure 4 is a sequence diagram exemplifying how this works.

At step 1, the user 402, on the digital consumer side 302, makes an hypertext transfer protocol (HTTP) GET request to the digital twin server 102 (which is exposed at a certain endpoint or URL), the request contains a payload (also known as HTTP body). The payload contains the parameters of the request, for example in the case of a simple digital twin that performs image classification the payload could be an image. For this request, a socket is created by the user's operating system. That socket is maintained by the untrusted CPU's 404 unencrypted memory.

At step 2, the digital twin producer 304 responds to this request with a 201 HTTP response (item created) and a payload that contains the attestation code which is used to verify if the code that is executed next is going to be executed within the user's secure enclave 306 and not in the user's untrusted CPU 404. In addition, a post_processing_module 312 is provided as well. This module will be used locally (within the secure enclave) to create a personalized/obfuscated rendition 308 of the output that is the original output of the digital twin 102.

At step 3, the post_processing_module 312 is installed on the consumer's trusted/secure enclave 306. Remote attestation is used to verify that the trusted part of post_processing_module is running inside the secure enclave.

Remote attestation can be provided, for example, using a method according to the trusted attestation protocol information model (TAP), which is explained in the specification document from Trusted Computing Group entitled "TGC Trusted Attestation Protocol (TAP) Information Model for TPM Families 1.2 and 2.0 and DICE Family 1.0", Version 1.0, Revision 0.29A, January 11, 2019.

At step 4, the CPU 404 (the secure enclave management) responds with a new HTTP POST request which contains the attestation response and a secure endpoint created by the trusted/secure enclave which is used for the remainder of this communication.

At step 5, the digital twin producer 304 has now verified that the post_processing_module 312 has been installed inside the consumer's 302 secure enclave 306 and contains the endpoint to be used to reach the trusted/secure enclave 06 instead of the untrusted CPU 404. To that end, the original HTTP response of the digital twin is now transmitted from the digital twin's producer 304 to the consumer's 302 secure enclave 306.

At step 6, there is a request for the user 402 or to the device of the user to provide the secure enclave 306 with personal data such as biometric data. Once that information has been received it is post_processed, i.e. transformed using the instructions of the post_processing_module. Local biometric or environmental data is used as input data to the post_processing_module e.g. as a random seed to change the response in such a way that it still maintains its message, but it is slightly shifted every time (at every request) to make it impossible for the user 402 (or the users) of the secure enclave 306 to associate it with a single input.

In a typical scenario - when interacting with a digital twin 102 (or machine learning model) every input has a specific output. In the case of a classification model, every image used as input will always have the same output (list of labels). It is this property that enables model inversion attacks which use this association to reconstruct the inner architecture of a machine learning model. With the method disclosed herein, using a post_processing_module, every input receives a slightly different output each time, thus making this association harder. More examples of how the post_processing_module 312 works are provided further below.

At step 7, the user 402 provides the requested biometric data.

At step 8, the post_process step modifies the response using biometric data from step 7.

At step 9, the secure enclave 306 provides the modified response to the user 402 through the untrusted_cpu 404. The post_processed response is pushed to the user's rendering module which then either visualizes the response (if it's text or imagery) or produces audio (in case of audio), tactile experience, smell or taste accordingly.

At step 10, after a certain period of time (expiration timer) defined by the digital twin producer 304 the post_processing_module 312 expires and is removed from the secure enclave 306.

A few assumptions are made in the scope of the sequence diagram of figure 4.

For simplicity only the positive scenario where this communication is successful end-to-end is considered. In this scenario, there are no dropped messages and the installation of the post processing module in the secure enclave is successful. It is also assumed that the secure enclave is trusted. It is also assumed that, in step, 8 the binary of post_processing_module has not been tampered with.

When the expiration timer has not expired, it is possible to avoid reinstalling the post_processing module in the consumer's trusted/secure enclave 306 at every request. Instead it is possible to re-use the same post processing module that has been placed there previously for the same digital twin. The main advantage with such an approach is a faster interaction with the digital twin producer as the negotiation and installation of the post_processing module can be omitted. One should be exercised this approach with caution and only in environments where it is considered impossible to intercept data traffic and therefore implement a "man-in-the-middle" type of attack.

Some use cases examples will now be discussed, starting with randomization of models. In this class of use cases, it is assumed that the inference model has two parts:
- The first part of the model (say M1) is a DT of the provider, which would be delivered and available to the user through secure enclave. The benefit of the local availability is lower communications overhead and lower latency.
- The second part of the model (say M2) comes from a set of equivalent models, available to the user. In some embodiments, these different models of similar accuracy could be obtained by random dropouts. Random dropout consists of using a single model to simulate having a large number of different network architectures by randomly dropping out nodes during training. In other embodiments, these different models could be different realizations of deep Bayesian Neural Networks or other stochastic models, characterized by learned parameters, as would be apparent to a person skilled in the art.

For every new request (but this could also be tuned to a batch of tasks), the DT output is computed in the secure enclave, using the private data (requested in Step 6 of Figure 4) to randomly select M2, i.e. one of the available models. This randomization preserves the performance of the inference task, but it makes it almost impossible for the user to map back the final outputs to the outputs of the M1. Consequently, this architecture can protect the DT.

Another example consists of image and text recognition models, where random dropouts on the second part of the model can preserve the privacy of M1.

In another example, related to an internet of senses scenario, a device creating an artificial flavor for smell can be considered. The process of this model is divided into two phases. DT provides a set of combinations of potential chemicals to produce a similar flavor, followed by a random selection of one of those combinations using a seed generated by private user information. Once a combination is selected, it is implemented at the user device to generate the flavor.

There are a few ways of randomizing the output of the DT in the secure enclave 306. One was, as previously explained is to have multiple DT which produce slightly different results and randomly selecting which DT will be used to produce the output. This can be called randomization of the models.

A way consists of randomization of the actual output of the model. In this case, the DT returns a set of real values (or a label) in the secure enclave. This output in the secure enclave is fed to another model that takes this label/values along with the private information of the user to return an equivalent label from a set of labels. Changes in this case may be applied to the values while preserving the final label. In one example of personalizing a response to a user's native language, instead of using the original class of the label produced by the DT, a synonym could be used instead.

In another example related to internet of senses and more particularly to smell, the DT could be responsible to provide a combination of chemicals that reproduces a certain smell at the end device of the user. After post processing, instead of giving one combination, the DT could propose multiple combinations of chemicals, and one of these combinations could be randomly returned to the user.

The method proposed here provides several advantages. It allows for interacting with digital twins (or any model) as usual (request-response) with a much lower risk of model inversion attacks. It overcomes model inversion attacks by personalizing and as such obfuscating the association between the input (request) and output (response) of the digital twin. The personalization is implemented on the consumer side and is therefore private. The information never leaks to the producer of the digital twin. The solution is scalable since the personalization does not occur on the digital twin producer side but instead on the consumer side, thus offloading the producer which would have been otherwise burdened with this task as the number of consumers per digital twin can be large. Due to the personalization and randomness, in the case when some users conspire to attack the same digital twin, these users would still not be able to combine their inputs since all outputs of the DT would be personalized and as such incompatible. Instead of the usual focus on data privacy alone, a model privacy-preserving method is proposed that is linked to data privacy mechanisms and is comprised of a double layered mechanism for more safety.

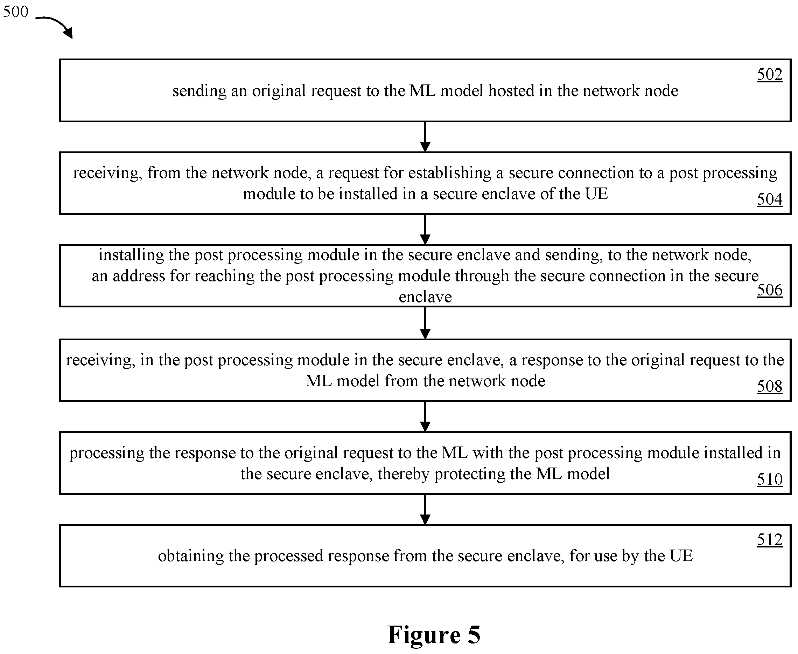

Referring to figure 5, there is provided a method 500, executed in a user equipment (UE), for protecting a machine learning (ML) model hosted in a network node. The method comprises sending, step 502, an original request to the ML model hosted in the network node. The method comprises receiving, step 504, from the network node, a request for establishing a secure connection to a post processing module to be installed in a secure enclave of the UE. The establishment of a connection may be done with a process that is running in an encrypted memory space of the UE, and such a process can only be accessed by privileged hardware e.g. which may be physically decoupled from a general purpose (and untrusted) processor 404, or which may be comprised in processor 404, for example in the form of a secure subsystem isolated from the main processor 404 or in the form of a virtual secure enclave managed by the operating system. It is assumed that a first secure connection has been established between the consumer and the producer of the ML model using state or the art techniques such as HTTPS or transport layer security (TLS) over user datagram protocol (UDP) or a virtual private network (VPN) connection. Within that first secure connection another "secure" connection is established to the consumer's enclave. It is secure in the sense that the connection created by the consumer's network stack terminates in the enclave's memory space. The method also comprises installing, step 506, the post processing module in the secure enclave and sending, to the network node, an address for reaching the post processing module through the secure connection in the secure enclave. The method comprises receiving, step 508, in the post processing module in the secure enclave, a response to the original request to the ML model from the network node. The method comprises processing, step 510, the response to the original request to the ML with the post processing module installed in the secure enclave, thereby protecting the ML model. The method comprises obtaining, step 512, the processed response from the secure enclave, for use by the UE.

The original request may be sent to the network node using a hyper text transfer protocol (HTTP) GET request comprising a payload containing parameters of the original request. Other Layer7 protocols that could be alternatively used include Gemini, Internet Message Access Protocol (IMAP), Trivial File Transfer Protocol (TFTP), Secure Shell (SSH), Telnet, Internet Relay Chat (IRC), Network Time Protocol (NTP), File Transfer Protocol (FTP), Network File System (NFS), HTTP secure (HTTPS), Dynamic Host Configuration Protocol (DHCP) SOAP, etc. In a lower layer, protocols such as Remote Procedure Call (RPC) could alternatively be used. In the general the protocol could be any kind of request/response protocol.

The request for establishing the secure connection may further comprise an attestation request. The method may further comprise, after installing the post processing module in the secure enclave, sending a remote attestation response to the network node, the remote attestation response attesting that the post processing module is installed in the secure enclave. The response to the original request to the ML model from the network node, may further comprise authentication data for authenticating the network node.

The method may further comprise, before processing the response with the post processing module, generating a random seed. The random seed may be generated using biometric data available in the UE. Examples of biometric data include any of: a current number of steps, a current heartrate, a current oxygen level, fingerprint, picture of the iris, face picture, body movement, voice, action selection in extended reality environment, etc. Alternatively, the random seed could be generated from data particular to the UE, such as different identifiers of the UE or device, including but not limited to international mobile subscriber identity (IMSI), media access control (MAC) address, Radio Network Temporary Identifier (RNTI), internet protocol (IP) address, etc. Alternatively, the random seed may be generated using environmental data. Examples of environmental data include any of: a current temperature, wind speed, weather forecast, etc. at a location of the UE.

The post processing module may apply a randomizing function to the response to the original request to the ML model. The randomizing function can take different forms as explained in relation to the different embodiments disclosed herein.

The response to the original request to the ML model from the network node may include weights and parameters of a plurality of derived ML models, the derived ML models providing outputs that are modified when compared with outputs of the corresponding original ML model. The processed response may be obtained by applying a randomizing function for selecting one of the derived ML models, and the processed response corresponds to the outputs of the selected derived ML model. Alternatively, weights of the ML model could be slightly modified in the UE, for example by quantizing the values. For example, instead of representing a value for a weight with 32 bits (as often done in reality) it could be represented with a lower precision such as 8 bits. That could be done as long as it changes the final outputs values without affecting the final performance of the classification task.

The method may further comprise deleting the post processing module from the secure enclave after a predetermined period of inactivity. However, the post processing module in the secure enclave may be used again for responding to a second request to the ML model hosted in the network node, if the second request is received before the end of the predetermined period of inactivity.

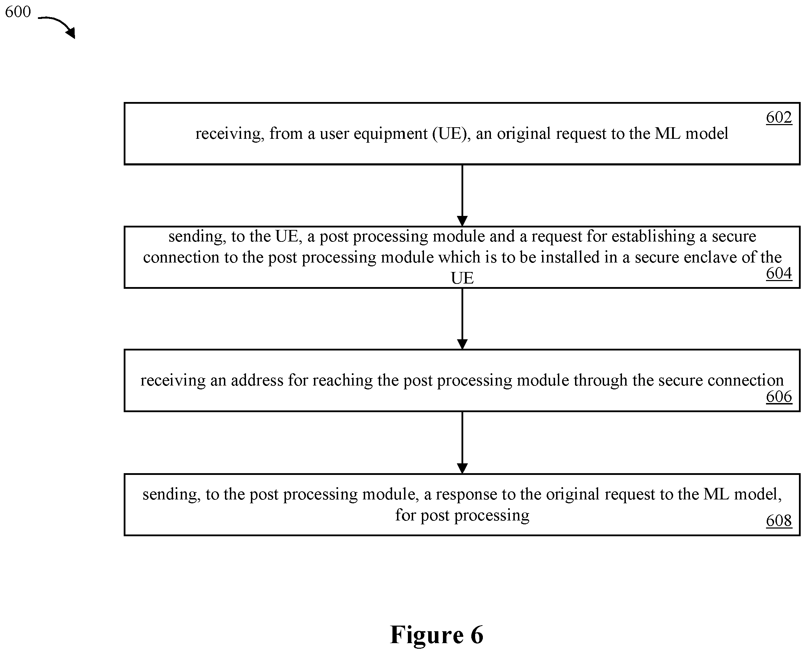

Referring to figure 6, there is provided a method 600, executed in a network node, for protecting a machine learning (ML) model hosted in the network node. The method comprises receiving, step 602, from a user equipment (UE), an original request to the ML model. The method comprises sending, step 604, to the UE, a post processing module and a request for establishing a secure connection to the post processing module which is to be installed in a secure enclave of the UE. The method comprises receiving, step 606, an address for reaching the post processing module through the secure connection. The method comprises sending, step 608, to the post processing module, a response to the original request to the ML model, for post processing. The original request may be received from the UE through a hyper text transfer protocol (HTTP) GET request comprising a payload containing parameters of the original request. The request for establishing the secure connection may further comprise an attestation request.

The method may further comprise, receiving a remote attestation response from the UE, the remote attestation response attesting that the post processing module is installed in the secure enclave. The response to the original request to the ML model, may further comprise authentication data for authenticating the network node. The post processing module may be operative to apply a randomizing function to the response to the original request to the ML model. The response to the original request to the ML model may include weights and parameters of a plurality of derived ML models, the derived ML models providing outputs that are modified when compared with outputs of the corresponding original ML model.

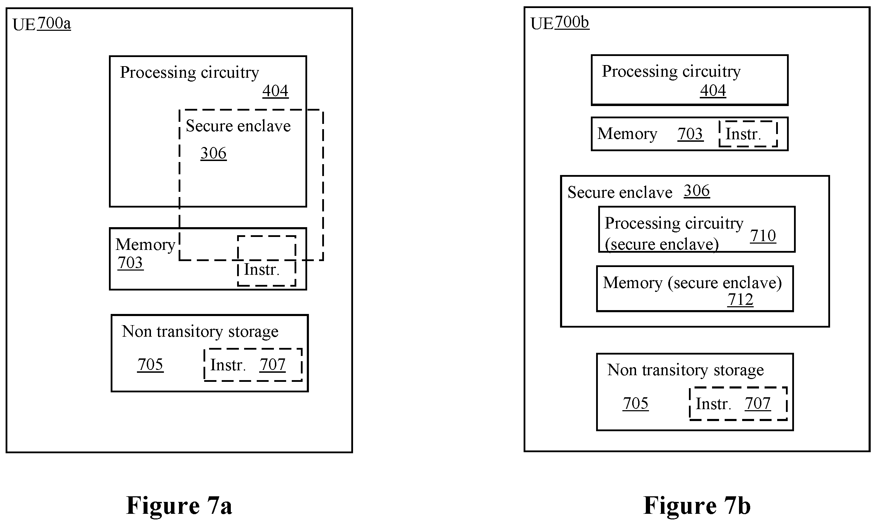

Referring to figures 7a and 7b, there are provided two alternative versions of a user equipment UE 700a and 700b with secure enclave. The UE is generally referred to as UE 700, and comprises processing circuitry 404, also previously referred to as untrusted CPU and memory 703. The memory 703 can contain instructions 707 executable by the processing circuitry 404 whereby functions and steps described herein may be executed to provide any of the relevant features and benefits disclosed herein.

The hardware may also include non-transitory, persistent, machine readable storage media 705 having stored therein the software and/or instruction 707 executable by processing circuitry to execute at least some of the functions and steps described herein.

The instructions 707 may include a computer program for configuring the processing circuitry 404. The computer program may be stored in a removable memory, such as a portable compact disc, portable digital video disc, or other removable media. The computer program may also be embodied in a carrier such as an electronic signal, optical signal, radio signal, or computer readable storage medium.

In addition, the UE 700a, 700b comprises a secure enclave 306, as described previously, which can take two forms.

In the first form, the UE 700a includes a secure enclave that is managed by the operating system, which reserves and secures resources (physical or virtual) through special functions in the processing circuitry for implementing the secure enclave.

In the second form, the UE 700b includes dedicated processing circuitry 710 and memory 712 that implement the secure enclave. The processing circuitry 710 executes some of the steps described herein that cannot be executed by the untrusted CPU 404, such as illustrated, for example, in figure 4.

There is provided a user equipment (UE) 700 operative to protect a machine learning (ML) model hosted in a network node. The UE 700 comprises processing circuits 404 and a memory 703. The memory 703 contains instructions executable by the processing circuits whereby the UE is operative to send an original request to the ML model hosted in the network node. The UE is operative to receive, from the network node, a request for establishing a secure connection to a post processing module to be installed in a secure enclave of the UE. The UE is operative to install the post processing module in the secure enclave and send, to the network node, an address for reaching the post processing module through the secure connection in the secure enclave. The UE is operative to receive, in the post processing module in the secure enclave, a response to the original request to the ML model from the network node. The UE is operative to process the response to the original request to the ML with the post processing module installed in the secure enclave, thereby protecting the ML model. The UE is operative to obtain the processed response from the secure enclave, for use by the UE.

The UE may be a cellular phone, a personal computer, a tablet, or process running on a network node. The UE may also be an internet of things device such as a vehicle or another type of user device. The UE may further be operative to execute any of the steps described herein.

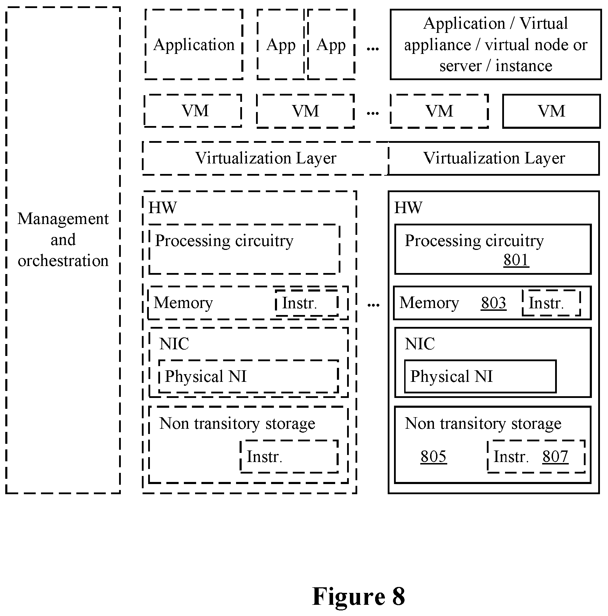

Referring to figure 8, there is provided a virtualization environment in which functions and steps described herein can be implemented.

A virtualization environment (which may go beyond what is illustrated in figure 8), may comprise systems, networks, servers, nodes, devices, etc., that are in communication with each other either through wire or wirelessly. Some or all of the functions and steps described herein may be implemented as one or more virtual components (e.g., via one or more applications, components, functions, virtual machines or containers, etc.) executing on one or more physical apparatus in one or more networks, systems, environment, etc.

A virtualization environment provides hardware comprising processing circuitry 801 and memory 803. The memory can contain instructions executable by the processing circuitry whereby functions and steps described herein may be executed to provide any of the relevant features and benefits disclosed herein.

The hardware may also include non-transitory, persistent, machine readable storage media 805 having stored therein software and/or instruction 807 executable by processing circuitry to execute functions and steps described herein.

The instructions 807 may include a computer program for configuring the processing circuitry 801. The computer program may be stored in a removable memory, such as a portable compact disc, portable digital video disc, or other removable media. The computer program may also be embodied in a carrier such as an electronic signal, optical signal, radio signal, or computer readable storage medium.

There is provided a network node (HW of figure 8), operative to protect a machine learning (ML) model hosted in the network node. The network node comprises processing circuits 801 and a memory 803. The memory 803 contains instructions executable by the processing circuits 801 whereby the network node is operative to receive, from a user equipment (UE), an original request to the ML model. The network node is operative to send, to the UE, a post processing module and a request for establishing a secure connection to the post processing module which is to be installed in a secure enclave of the UE. The network node is operative to receive an address for reaching the post processing module through the secure connection. The network node is operative to send, to the post processing module, a response to the original request to the ML model, for post processing. The network node may further be operative to execute any of the steps described herein.

There is provided a non-transitory computer readable media 707, 807 having stored thereon instructions for protecting a machine learning (ML) model hosted in a network node. The instructions may comprise any of the steps described herein.

Modifications will come to mind to one skilled in the art having the benefit of the teachings presented in the foregoing description and the associated drawings. Therefore, it is to be understood that modifications, such as specific forms other than those described above, are intended to be included within the scope of this disclosure. The previous description is merely illustrative and should not be considered restrictive in any way. The scope sought is given by the appended claims, rather than the preceding description, and all variations and equivalents that fall within the range of the claims are intended to be embraced therein. Although specific terms may be employed herein, they are used in a generic and descriptive sense only and not for purposes of limitation.

## Claims

1. A method (500), executed in a user equipment, UE, for protecting a machine learning, ML, model hosted in a network node, comprising:
sending (502) an original request to the ML model hosted in the network node;
receiving (504), from the network node, a request for establishing a secure connection to a post processing module to be installed in a secure enclave of the UE;
installing (506) the post processing module in the secure enclave and sending, to the network node, an address for reaching the post processing module through the secure connection in the secure enclave;
receiving (508), in the post processing module in the secure enclave, a response to the original request to the ML model from the network node;
processing (510) the response to the original request to the ML model with the post processing module installed in the secure enclave, thereby protecting the ML model; and
obtaining (512) the processed response from the secure enclave, for use by the UE;
wherein the post processing module applies a randomizing function to the response to the original request to the ML model; and/or
wherein the response to the original request to the ML model from the network node includes weights and parameters of a plurality of derived ML models, the derived ML models providing outputs that are modified when compared with outputs of the corresponding original ML model, and the processed response is obtained by applying a randomizing function for selecting one of the derived ML models, and the processed response corresponds to the outputs of the selected derived ML model.

2. The method of claim 1, wherein the original request is sent to the network node using a hyper text transfer protocol (HTTP) GET request comprising a payload containing parameters of the original request.

3. The method of claim 1, wherein the request for establishing the secure connection further comprises an attestation request.

4. The method of claim 3, further comprising, after installing the post processing module in the secure enclave, sending a remote attestation response to the network node, the remote attestation response attesting that the post processing module is installed in the secure enclave.

5. The method of claim 1, wherein the response to the original request to the ML model from the network node further comprises authentication data for authenticating the network node.

6. The method of claim 1, further comprising, before processing the response with the post processing module, generating a random seed.

7. The method of claim 6, wherein the random seed is generated using biometric data available in the UE, or wherein the random seed is generated using environmental data.

8. The method of claim 1, further comprising deleting the post processing module from the secure enclave after a predetermined period of inactivity, wherein, optionally, the post processing module in the secure enclave is used again for responding to a second request to the ML model hosted in the network node, if the second request is received before the end of the predetermined period of inactivity.

9. A method (600), executed in a network node, for protecting a machine learning, ML, model hosted in the network node, comprising:
receiving (602), from a user equipment, UE, an original request to the ML model;
sending (604), to the UE, a post processing module and a request for establishing a secure connection to the post processing module which is to be installed in a secure enclave of the UE;
receiving (606) an address for reaching the post processing module through the secure connection;
sending (608), to the post processing module, a response to the original request to the ML model, for post processing;
wherein the post processing module is operative to apply a randomizing function to the response to the original request to the ML model, and/or
wherein the response to the original request to the ML model includes weights and parameters of a plurality of derived ML models, the derived ML models providing outputs that are modified when compared with outputs of the corresponding original ML model, wherein the post processing module is operative to obtain a processed response to the original request to the ML model by applying a randomizing function for selecting one of the derived ML models, and the processed response corresponds to the outputs of the selected derived ML model.

10. The method of claim 9, wherein the original request is received from the UE through a hyper text transfer protocol, HTTP, GET request comprising a payload containing parameters of the original request, or wherein the response to the original request to the ML model further comprise authentication data for authenticating the network node.

11. The method of claim 9, wherein the request for establishing the secure connection further comprises an attestation request, optionally further comprising; receiving a remote attestation response from the UE, the remote attestation response attesting that the post processing module is installed in the secure enclave.

12. A user equipment, UE, operative to protect a machine learning, ML, model hosted in a network node, the UE comprising processing circuits and a memory, the memory containing instructions executable by the processing circuits whereby the UE is operative to perform the method according to one of claims 1 to 8.

13. The UE of claim 12, wherein the UE is a cellular phone, a personal computer, a tablet, or process running on a network node.

14. A network node, operative to protect a machine learning, ML, model hosted in the network node, comprising processing circuits and a memory, the memory containing instructions executable by the processing circuits whereby the network node is operative to perform the method according to one of claims 9 to 11.

15. A non-transitory computer readable media having stored thereon instructions for protecting a machine learning, ML, model hosted in a network node, wherein the instructions, when executed by a computer, cause the computer to carry out the method of one of claims 1 to 11.

## Patentansprüche

1. Verfahren (500), das von einer Benutzereinrichtung, UE, ausgeführt wird, zum Schützen eines in einem Netzwerkknoten gehosteten Modells für maschinelles Lernen, ML, umfassend:
Senden (502) einer ursprünglichen Anforderung an das in dem Netzwerkknoten gehostete ML-Modell;
Empfangen (504) einer Anforderung von dem Netzwerkknoten zum Herstellen einer sicheren Verbindung mit einem Nachverarbeitungsmodul von dem Netzwerkknoten, das in einer sicheren Enklave der UE installiert werden soll;
Installieren (506) des Nachverarbeitungsmoduls in der sicheren Enklave und Senden einer Adresse zum Erreichen des Nachverarbeitungsmoduls über die sichere Verbindung in der sicheren Enklave an den Netzwerkknoten;
Empfangen (508) einer Antwort auf die ursprüngliche Anforderung an das ML-Modell von dem Netzwerkknoten in dem Nachverarbeitungsmodul in der sicheren Enklave;
Verarbeiten (510) der Antwort auf die ursprüngliche Anforderung an das ML-Modell mit dem in der sicheren Enklave installierten Nachverarbeitungsmodul, um dadurch das ML-Modell zu schützen; und
Erhalten (512) der verarbeiteten Antwort aus der sicheren Enklave zur Verwendung durch die UE;
wobei das Nachverarbeitungsmodul eine Randomisierungsfunktion auf die Antwort auf die ursprüngliche Anforderung an das ML-Modul anwendet; und/oder
wobei die Antwort auf die ursprüngliche Anforderung an das ML-Modell von dem Netzwerkknoten Gewichte und Parameter einer Mehrzahl abgeleiteter ML-Modelle umfasst, wobei die abgeleiteten ML-Modelle Ausgaben bereitstellen, die bei Vergleich mit Ausgaben des entsprechenden ursprünglichen ML-Modells modifiziert werden, und die verarbeitete Antwort durch Anwenden einer Randomisierungsfunktion zum Auswählen eines der abgeleiteten ML-Modelle erhalten wird und die verarbeitete Antwort den Ausgaben des ausgewählten abgeleiteten ML-Modells entspricht.

2. Verfahren nach Anspruch 1, wobei die ursprüngliche Anforderung unter Verwendung einer Hypertext Transfer Protocol-GET-Anforderung (HTTP-GET-Anforderung), die eine Nutzlast umfasst, die Parameter der ursprünglichen Anforderung enthält, an den Netzwerkknoten gesendet wird.

3. Verfahren nach Anspruch 1, wobei die Anforderung zum Herstellen der sicheren Verbindung ferner eine Bestätigungsanforderung umfasst.

4. Verfahren nach Anspruch 3, ferner umfassend Senden einer Remote-Bestätigungsantwort an den Netzwerkknoten nach dem Installieren des Nachverarbeitungsmoduls in der sicheren Enklave, wobei die Remote-Bestätigungsantwort bestätigt, dass das Nachverarbeitungsmodul in der sicheren Enklave installiert ist.

5. Verfahren nach Anspruch 1, wobei die Antwort auf die ursprüngliche Anforderung an das ML-Modell von dem Netzwerkknoten ferner Authentifizierungsdaten zum Authentifizieren des Netzwerkknotens umfasst.

6. Verfahren nach Anspruch 1, ferner umfassend Generieren eines Zufallsstartwerts vor dem Verarbeiten der Antwort mit dem Nachverarbeitungsmodul.

7. Verfahren nach Anspruch 6, wobei der Zufallsstartwert unter Verwendung biometrischer Daten generiert wird, die in der UE verfügbar sind, oder wobei der Zufallsstartwert unter Verwendung von Umgebungsdaten generiert wird.

8. Verfahren nach Anspruch 1, ferner umfassend Löschen des Nachverarbeitungsmoduls aus der sicheren Enklave nach einer vorbestimmten Inaktivitätsperiode, wobei optional das Nachverarbeitungsmodul in der sicheren Enklave wieder verwendet wird, um auf eine zweite Anforderung an das in dem Netzwerkknoten gehostete ML-Modell zu antworten, falls die zweite Anforderung vor dem Ende der vorbestimmten Inaktivitätsperiode empfangen wird.

9. Verfahren (600), das in einem Netzwerkknoten, ausgeführt wird, zum Schützen eines in dem Netzwerkknoten gehosteten Modells für maschinelles Lernen, ML, umfassend:
Empfangen (602) einer ursprünglichen Anforderung an das ML-Modell von einer Benutzereinrichtung, UE;
Senden (604) eines Nachverarbeitungsmoduls und einer Anforderung zum Herstellen einer sicheren Verbindung mit dem Nachverarbeitungsmodul, das in einer sicheren Enklave der UE installiert werden soll, an die UE;
Empfangen (606) einer Adresse zum Erreichen des Nachverarbeitungsmoduls über die sichere Verbindung;
Senden (608) einer Antwort auf die ursprüngliche Anforderung an das ML-Modell von dem Netzwerkknoten an das Nachverarbeitungsmodul zur Nachverarbeitung;
wobei das Nachverarbeitungsmodul dazu ausgelegt ist, eine Randomisierungsfunktion auf die Antwort auf die ursprüngliche Anforderung an das ML-Modul anzuwenden, und/oder
wobei die Antwort auf die ursprüngliche Anforderung an das ML-Modell Gewichte und Parameter einer Mehrzahl abgeleiteter ML-Modelle umfasst, wobei die abgeleiteten ML-Modelle Ausgaben bereitstellen, die bei Vergleich mit Ausgaben des entsprechenden ursprünglichen ML-Modells modifiziert werden, wobei das Nachverarbeitungsmodul dazu ausgelegt ist, eine verarbeitete Antwort auf die ursprüngliche Anforderung an das ML-Modell durch Anwenden einer Randomisierungsfunktion zum Auswählen eines der abgeleiteten ML-Modelle zu erhalten, und die verarbeitete Antwort den Ausgaben des ausgewählten abgeleiteten ML-Modells entspricht.

10. Verfahren nach Anspruch 9, wobei die ursprüngliche Anforderung von der UE über eine Hypertext Transfer Protocol-GET-Anforderung, HTTP-GET-Anforderung, empfangen wird, die eine Nutzlast umfasst, die Parameter der ursprünglichen Anforderung enthält, oder wobei die Antwort auf die ursprüngliche Antwort an das ML-Modell ferner Authentifizierungsdaten zum Authentifizieren des Netzwerkknotens umfasst.

11. Verfahren nach Anspruch 9, wobei die Anforderung zum Herstellen der sicheren Verbindung ferner eine Bestätigungsanforderung umfasst, optional ferner umfassend: Empfangen einer Remote-Bestätigungsantwort von der UE nach dem Installieren des Nachverarbeitungsmoduls in der sicheren Enklave, wobei die Remote-Bestätigungsantwort bestätigt, dass das Nachverarbeitungsmodul in der sicheren Enklave installiert ist.

12. Benutzereinrichtung, UE, die dazu ausgelegt ist, ein in einem Netzwerkknoten gehostetes Modell für maschinelles Lernen, ML, zu schützen, wobei die UE Verarbeitungsschaltungen und einen Speicher umfasst, wobei der Speicher Anweisungen enthält, die von den Verarbeitungsschaltungen ausgeführt werden können, wodurch die UE zum Durchführen des Verfahrens nach einem der Ansprüche 1 bis 8 ausgelegt ist.

13. UE nach Anspruch 12, wobei die UE eine Mobiltelefon, ein Personalcomputer, ein Tablet, oder ein Prozess ist, der auf einem Netzwerknoten ausgeführt wird.

14. Netzwerkknoten, der dazu ausgelegt ist, ein in dem Netzwerkknoten gehostetes Modell für maschinelles Lernen zu schützen, und Verarbeitungsschaltungen und einen Speicher umfasst, wobei der Speicher Anweisungen enthält, die von den Verarbeitungsschaltungen ausgeführt werden können, wodurch der Netzwerkknoten zum Durchführen des Verfahrens nach einem der Ansprüche 9 bis 11 ausgelegt ist.

15. Nicht-transitorisches computerlesbares Medium mit darauf gespeicherten Anweisungen zum Schützen eines in einem Netzwerkknoten gehosteten Modells für maschinelles Lernen, ML, wobei die Anweisungen bei Ausführung durch einen Computer den Computer zum Durchführen des Verfahrens nach einem der Ansprüche 1 bis 11 veranlassen.

## Revendications

1. Procédé (500), exécuté dans un équipement utilisateur, UE, pour protéger un modèle d'apprentissage automatique, ML, hébergé dans un nœud de réseau, comprenant
l'envoi (502) d'une demande initiale au modèle ML hébergé dans le nœud de réseau ;
la réception (504), depuis le nœud de réseau, d'une demande d'établissement d'une connexion sécurisée à un module de post-traitement à installer dans une enclave sécurisée de l'UE ;
l'installation (506) du module de post-traitement dans l'enclave sécurisée et l'envoi, au nœud de réseau, d'une adresse pour joindre le module de post-traitement via la connexion sécurisée dans l'enclave sécurisée ;
la réception (508), dans le module de post-traitement dans l'enclave sécurisée, d'une réponse à la demande initiale au modèle ML depuis le nœud de réseau ;
le traitement (510) de la réponse à la demande initiale au modèle ML avec le module de post-traitement installé dans l'enclave sécurisée, en protégeant ainsi le modèle ML ; et
l'obtention (512) de la réponse traitée depuis l'enclave sécurisée, pour son utilisation par l'UE ;
dans lequel le module de post-traitement applique une fonction de randomisation à la réponse à la demande initiale au modèle ML ; et/ou
dans lequel la réponse à la demande initiale au modèle ML depuis le nœud de réseau inclut des poids et des paramètres d'une pluralité de modèles ML dérivés, les modèles ML dérivés fournissant des sorties qui sont modifiées par rapport à des sorties du modèle ML initial correspondant, et la réponse traitée est obtenue par l'application d'une fonction de randomisation pour sélectionner un ou plusieurs modèles ML dérivés, et la réponse traitée correspond aux sorties du modèle ML dérivé sélectionné.

2. Procédé selon la revendication 1, dans lequel la demande initiale est envoyée au nœud de réseau à l'aide d'une demande GET de protocole de transfert hypertexte (HTTP) comprenant une charge utile contenant des paramètres de la demande initiale.

3. Procédé selon la revendication 1, dans lequel la demande d'établissement de la connexion sécurisée comprend en outre une demande d'attestation.

4. Procédé selon la revendication 3, comprenant en outre, après l'installation du module de post-traitement dans l'enclave sécurisée, l'envoi d'une réponse d'attestation distante au nœud de réseau, la réponse d'attestation distante attestant que le module de post-traitement est installé dans l'enclave sécurisée.

5. Procédé selon la revendication 1, dans lequel la réponse à la demande initiale au modèle ML depuis le nœud de réseau comprend en outre des données d'authentification pour authentifier le nœud de réseau.

6. Procédé selon la revendication 1, comprenant en outre, avant le traitement de la réponse avec le module de post-traitement, la génération d'une graine aléatoire.

7. Procédé selon la revendication 6, dans lequel la graine aléatoire est générée à l'aide de données biométriques disponibles dans l'UE, ou dans lequel la graine aléatoire est générée à l'aide de données environnementales.

8. Procédé selon la revendication 1, comprenant en outre la suppression du module de post-traitement de l'enclave sécurisée après une période d'inactivité prédéterminée, dans lequel, facultativement, le module de post-traitement dans l'enclave sécurisée est utilisé à nouveau pour répondre à une deuxième demande au modèle ML hébergé dans le nœud de réseau, si la deuxième demande est reçue avant la fin de la période d'inactivité prédéterminée.

9. Procédé (600), exécuté dans un nœud de réseau, pour protéger un modèle d'apprentissage automatique, ML, hébergé dans le nœud de réseau, comprenant :
la réception (602), depuis un équipement utilisateur, UE, d'une demande initiale au modèle ML ;
l'envoi (604), à l'UE, d'un module de post-traitement et d'une demande d'établissement d'une connexion sécurisée au module de post-traitement qui doit être installé dans une enclave sécurisée de l'UE ;
la réception (606) d'une adresse pour joindre le module de post-traitement via la connexion sécurisée ;
l'envoi (608), au module de post-traitement, d'une réponse à la demande initiale au modèle ML pour le post-traitement ;
dans lequel le module de post-traitement est fonctionnel pour appliquer une fonction de randomisation à la réponse à la demande initiale au modèle ML ; et/ou
dans lequel la réponse à la demande initiale au modèle ML inclut des poids et des paramètres d'une pluralité de modèles ML dérivés, les modèles ML dérivés fournissant des sorties qui sont modifiées par rapport à des sorties du modèle ML initial correspondant, dans lequel le module de post-traitement est fonctionnel pour obtenir une réponse traitée à la demande initiale au modèle ML par l'application d'une fonction de randomisation pour sélectionner un ou plusieurs modèles ML dérivés, et la réponse traitée correspond aux sorties du modèle ML dérivé sélectionné.

10. Procédé selon la revendication 9, dans lequel la demande initiale est reçue depuis l'UE par le biais d'une demande GET de protocole de transfert hypertexte, HTTP, comprenant une charge utile contenant des paramètres de la demande initiale, ou dans lequel la réponse à la demande initiale au modèle ML comprend en outre des données d'authentification pour authentifier le nœud de réseau.

11. Procédé selon la revendication 9, dans lequel la demande d'établissement de la connexion sécurisée comprend en outre une demande d'attestation, facultativement comprenant en outre : la réception d'une réponse d'attestation distante depuis l'UE, la réponse d'attestation distante attestant que le module de post-traitement est installé dans l'enclave sécurisée.

12. Equipement utilisateur, UE, fonctionnel pour protéger un modèle d'apprentissage automatique, ML, hébergé dans un nœud de réseau, l'UE comprenant des circuits de traitement et une mémoire, la mémoire contenant des instructions exécutables par les circuits de traitement selon lesquelles l'UE est fonctionnel pour réaliser le procédé selon l'une des revendications 1 à 8.

13. UE selon la revendication 12, dans lequel l'UE est un téléphone cellulaire, un ordinateur personnel, une tablette, ou un processus s'exécutant sur un nœud de réseau.

14. Nœud de réseau, fonctionnel pour protéger un modèle d'apprentissage automatique, ML, hébergé dans le nœud de réseau, comprenant des circuits de traitement et une mémoire, la mémoire contenant des instructions exécutables par les circuits de traitement selon lesquelles le nœud de réseau est fonctionnel pour réaliser le procédé selon l'une des revendications 9 à 11.

15. Supports non transitoires lisibles par ordinateur sur lesquels sont stockées des instructions pour protéger un modèle d'apprentissage automatique, ML, hébergé dans un nœud de réseau, dans lequel les instructions, lorsqu'elles sont exécutées par un ordinateur, amènent l'ordinateur à réaliser le procédé selon l'une des revendications 1 à 11.
